# EUROPÄISCHE PATENTSCHRIFT

(11) **EP 0 709 615 B1**
(45) Veröffentlichungstag und Bekanntmachung des Hinweises auf die Patenterteilung: **03.09.2003**
(21) Anmeldenummer: 95111892.6
(22) Anmeldetag: 28.07.1995
(51) Int. Cl.: F16L 55/033

(54) **Spannbandunterlage**
Insert for a pipe clamp
Garniture interne pour collier de fixation de tuyauterie

(30) Priorität: 31.10.1994 DE 9417491 U
(43) Veröffentlichungstag der Anmeldung: 01.05.1996
(73) Patentinhaber: Hydac Accessories GmbH, 66280 Sulzbach/Saar (DE)
(72) Erfinder: Kasubke, Volker, D-66540 Neunkirchen (DE)
(74) Vertreter: Patentanwälte Bartels und Partner

(56) Entgegenhaltungen:
- EP-A- 0 508 050
- DE-A- 2 121 285
- DE-A- 4 029 090
- FR-A- 1 056 063

## Beschreibung

Die Erfindung betrifft eine Bandunterlage für ein Spannband zum Umfassen von rohrförmigen Körpern mit den Merkmalen des Oberbegriffes des Patentanspruches 1.

Solche Band- oder Spannbandunterlagen dienen dazu, eine Art Isolierung zwischen dem eigentlichen Spannband aus Metall und rohrförmigen Körpern, wie Behältern oder fluidführenden Rohren, herzustellen. Die Bandunterlage soll dabei der Vermeidung von Kontaktkorrosion dienen, eine elektrische Isolierung bieten sowie einen Oberflächenschutz oder zur Behälterrundumisolierung eingesetzt werden. Die zur Zeit frei auf dem Markt erhältlichen Bandunterlagen bestehen überwiegend aus einem Gummiprofil, das als Teil des eigentlichen Spannbandes innenumfangsseitig an dem Spannband festgelegt ist. Da bei den bekannten Lösungen die Bandunterlage mit dem Spannband verläuft, kommt es dazu, daß an Stellen, wo das Spannband um eine Halterung für die Aufnahme des jeweiligen rohrförmigen Körpers beispielsweise in Form von Konsolen herumgeführt ist, die Isolierung in Form der Bandunterlage von dem rohrförmigen Körper abgehoben ist und eine Unterbrechung der Isolierung mit entsprechend nachteiligen Folgen entsteht. Ferner bauen die bekannten Spannbänder mit innenumfangsseitig eingesetzter Bandunterlage groß auf, was deren Einsatzmöglichkeiten verringert.

Durch die FR-A-1056063 ist eine gattungsgemäße Bandunterlage bekannt, die aus einem streifenförmigen Band besteht, das an seinem einen freien Ende Rasten aufweist, die aus dreieckförmigen Vorsprüngen gebildet sind, die paarweise einander gegenüberliegend längs der beiden Laschenränder verlaufen. Auf der gegenüberliegenden Seite, also am anderen freien Bandende, ist eine rechteckförmige Ausnehmung vorhanden, wobei das dahingehende Bandende über einen zumindest teilweise umlaufenden Steg vom sonstigen streifenförmigen Band getrennt ist. Durch Einschlaufen des einen freien Bandendes mit seinen dreieckförmigen Rasten in die Ausnehmung am anderen Bandende läßt sich das Band in vorgebbaren Durchmesserbereichen schließen zwecks Umfassen von rohrförmigen Körpern. Bei der bekannten Lösung läßt sich mithin die laschenförmige Verlängerung in Einhandbedienung durch die zugehörige Ausnehmung stecken und dadurch, daß die Verhakung der laschenförmigen Verlängerung mit ihren dreieckförmigen Rasten unmittelbar in der Ausnehmung erfolgt, steht die freie Zunge der Bandunterlage in Form der Verlängerung von der Oberseite des Bandes vor, was zum einen ein vollständiges Umschließen des zu umfassenden rohrförmigen Körpers beeinträchtigt und im übrigen viel Einbauraum benötigt.

Ausgehend von diesem Stand der Technik liegt der Erfindung die Aufgabe zugrunde, eine Bandunterlage zu schaffen, die bei freier Spannbandführung ein sicheres Umschließen und mithin eine sichere Isolierung des jeweils umfaßten rohrförmigen Körpers bietet und die darüber hinaus wenig Einbauraum benötigt.

Eine dahingehende Aufgabe löst eine Bandunterlage mit den Merkmalen des Patentanspruches 1. Dadurch, daß gemäß dem kennzeichnenden Teil des Patentanspruches 1 die Ausnehmung eine schlitzförmige Verbreiterung aufweist und daß diese schlitzförmige Verbreiterung an der dem Bandende abgekehrten Seite der Ausnehmung angeordnet ist, ist ein vom Spannband separates Bauteil in Form der Bandunterlage gegeben, die sich von einer Bedienperson einfach um rohrförmige Körper herum- und festlegen läßt. Die laschenförmige Verlängerung läßt sich in Einhandbedienung durch die zugehörige Ausnehmung stecken und dadurch, daß die Verhakung der laschenförmigen Verlängerung nicht unmittelbar in der Ausnehmung, sondern an den Enden der schlitzförmigen Verbreiterung erfolgt, läßt sich die freie Zunge der Bandunterlage in Form der Verlängerung ohne größeren Vorstand eben auf die Oberseite des Bandes auflegen, wobei die Verhakung der jeweiligen Rasten mit der schlitzförmigen Verbreiterung im wesentlichen in der Bandebene erfolgt. Die erfindungsgemäße Bandunterlage nimmt also wenig Bauraum ein und läßt sich unabhängig vom Spannband unmittelbar an rohrförmigen Körpern festlegen.

Bei einer bevorzugten Ausführungsform der erfindungsgemäßen Bandunterlage sind die Rasten aus dreieckförmigen Vorsprüngen gebildet, die paarweise einander gegenüberliegend längs der beiden Laschenränder angeordnet sind. Hierdurch ist eine Vielzahl von Verrastungsmöglichkeiten gegeben und die Bandunterlage läßt sich in einem vorgegebenen Größenbereich an beliebige Durchmesser der angesprochenen rohrförmigen Körper anpassen.

Bei einer weiteren bevorzugten Ausführungsform der erfindungsgemäßen Bandunterlage ist mindestens eine weitere Ausnehmung vorhanden, wobei die Ausnehmungen hintereinander in Reihe angeordnet,das eine Bandende durchgreifen, das gegenüber dem sonstigen Band in der Breite abgesetzt ist und wobei die jeweilige Ausnehmung bis auf die schlitzförmigen Verbreiterungen rechteckförmig ausgebildet ist. Aufgrund der mehrfach vorhandenen Ausnehmungen läßt sich der Anpassungsbereich im Hinblick auf verschiedene Durchmessergrößen an rohrförmigen Körpern noch weiter vergrößern.

Bei einer weiteren besonders bevorzugten Ausführungsform der erfindungsgemäßen Bandunterlage verringert die laschenförmige Verlängerung zu ihrem freien Ende hin sich in der Breite und weist parallel zueinander verlaufende parallele Schlitze auf, die zwischen dem Bandende und den Rasten angeordnet sind. Aufgrund dieser Schlitze ist in dem ansonsten glatten Kunststoff- oder Gummimaterial eine Art Unterbrechung oder Aufrauhung gegeben, die einer Erhöhung der Griffigkeit dient und die Handhabung der Bandunterlage für die Bedienperson erleichtert. Vorzugsweise weist das Band außenumfangsseitig zumindest teilweise randseitig einen vorstehenden Rand auf, so daß das auf die Bandunterlage aufgesetzte Spannband im Bereich des vorstehenden Randes nicht von der Bandunterlage rutschen kann, was das Anbringen des Spannbandes auf derselben erleichtert.

Im folgenden ist die erfindungsgemäße Bandunterlage anhand der Zeichnung näher erläutert.

Es zeigen:
- Fig. 1: in Draufsicht die Bandunterlage mit ihren freien Enden,
- Fig. 2: in prinzipieller Darstellung eine Seitenansicht eines von der Bandunterlage umfaßten rohrförmigen Körpers.

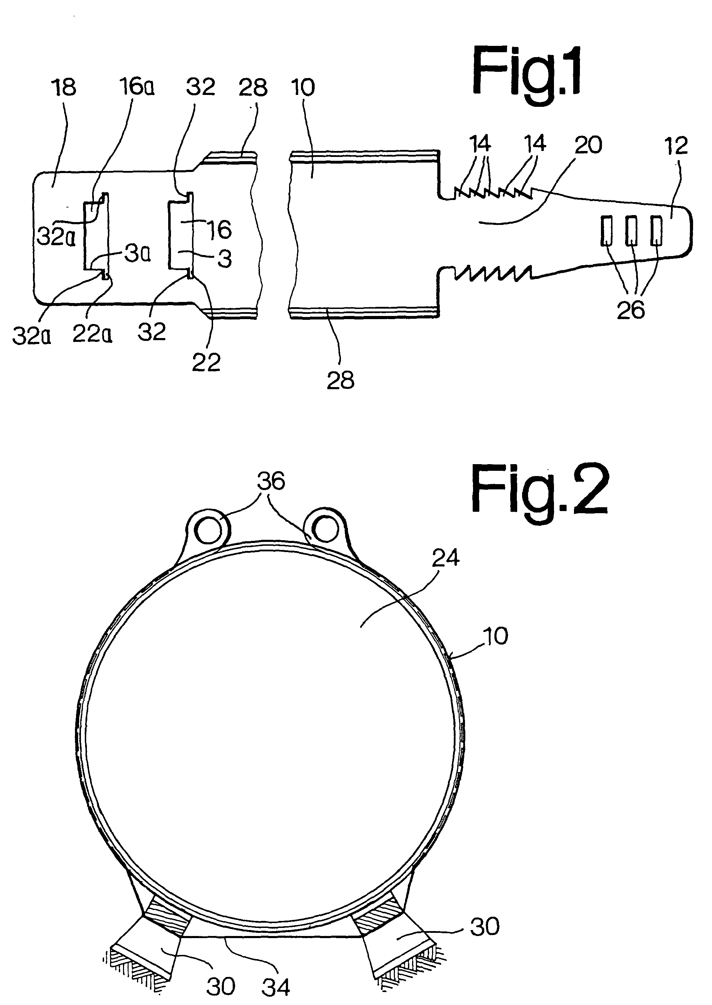

Die Bandunterlage nach der Fig. 1 besteht aus einem Gummioder Kunststoffmaterial vorzugsweise aus PE-Material. Die Bandunterlage besteht aus einem einstückigen streifenförmigen Band 10, das an seinem einen, in Blickrichtung auf die Fig. 1 gesehen rechten Ende 12 Rasten 14 aufweist, die durch eine Ausnehmung 16 am anderen Ende 18 durchsteckbar und dort verhakbar sind. Die Rasten 14 sind längs einer laschenförmigen Verlängerung 20 des Bandes 10 angeordnet, wobei die Verlängerung 20 in der Breite gegenüber dem sonstigen Band 10 gemäß der Darstellung in der Fig. 1 abgesetzt und verringert ist. Ferner weist die Ausnehmung 16 auf ihrer dem Bandende 18 abgekehrten Seite eine schlitzförmige Verbreiterung 22 auf.

Die Rasten 14 sind aus dreieckförmigen Vorsprüngen gebildet, die paarweise einander gegenüberliegend längs der beiden Laschenränder angeordnet sind. Hierbei liegen die am weitest vorstehenden Ecken der dreieckförmigen Vorsprünge eines jeden Laschenrandes entlang einer fiktiven Linie, die jeweils parallel zur Längsachse des Bandes 10 verläuft.

Um einen größeren Durchmesserbereich an aufzunehmenden rohrförmigen Körpern 24 abzudecken, ist neben der bereits beschriebenen Ausnehmung 16 eine weitere Ausnehmung 16a vorhanden, wobei die Ausnehmungen 16, 16a, wie dies insbesondere die Fig. 1 zeigt, hintereinander in Reihe angeordnet das Bandende 18 vollständig durchgreifen. Im Bereich der Ausnehmungen 16, 16a ist das Bandende 18 gegenüber dem sonstigen Band 10 in der Breite gleichfalls abgesetzt und verringert. Ferner ist die jeweilige Ausnehmung 16, 16a bis auf die schlitzförmigen Verbreiterungen 22, 22a im wesentlichen rechteckförmig ausgebildet. Die laschenförmige Verlängerung 20 verringert sich zu ihrem freien Ende hin gleichfalls in der Breite und weist drei parallel zueinander verlaufende Schlitze 26 auf, die zwischen dem Bandende 12 und den Rasten 14 angeordnet sind. Ferner weist das Band 10 außenumfangsseitig und in der Fig. 1 gesehen dem Betrachter zugewandt randseitig jeweils einen vorstehenden Rand 28 auf.

In der Fig. 2 ist ein Anwendungsbeispiel für die beschriebene Bandunterlage dargestellt. Ein rohrförmiger Körper 24, beispielsweise in Form eines Behälters, ist auf zwei konsolenartigen Halterungen 30 gelagert und abgestützt. Er soll nunmehr fest mit diesen Halterungen 30 verbunden und gegenüber diesen isoliert werden. Hierzu wird zunächst im Bereich der Halterungen 30 um den Behälter 24 die Bandunterlage in Form des beschriebenen Bandes 10 herumgelegt und die beiden Enden 12 und 18 derart miteinander verrastet, daß die Bandunterlage bündig mit ihrer Innenumfangsseite auf der Außenumfangsseite des Behälters 24 aufliegt. Das in der Fig. 1 dargestellte Band 10 wird mit seinen beiden Enden 12 und 18 in die Bildebene hinein verschwenkt und die laschenförmige Verlängerung 20 mit ihren Rasten 14 in Abhängigkeit von der Durchmessergröße des Behälters 24 in eine der Ausnehmungen 16 oder 16a gesteckt. Die laschenförmige Verlängerung 20 wird dann so lange von Hand durch die Ausnehmung 16 oder 16a gezogen bis das Band 10 bündig an dem Behälter 24 anliegt.

Da das Band 10 aus elastisch nachgiebigem Kunststoff- oder Gummimaterial besteht, geht das Durchziehen der Verlängerung 20 durch die gewählte Ausnehmung 16 oder 16a problemlos vonstatten. Anschließend wird das Ende 12 losgelassen und unter der Eigenspannung des Bandes 10 findet die eigentliche Verrastung statt, wobei ohne größeren Überstand in einer Ebene liegend ein Paar an Rasten 14 an dem Überstand 32 oder 32a zu liegen kommt, den die schlitzförmige Verbreiterung 22 oder 22a in der rechteckförmigen Ausnehmung 16 bzw. 16a hinterläßt. Der derart mit der Bandunterlage versehene Behälter 24 wird dann auf die konsolenartige Halterung 30 aufgesetzt und anschließend ein geeignetes Spannband 34 aus Metallwerkstoff herumgeführt.

Hierbei durchgreift das Spannband 34, beispielsweise über eine Schlitzführung, die konsolenartige Halterung 30. Das Spannband 34 weist jeweils an seinem freien Ende eine Festlegemöglichkeit 36 auf, die der Anlenkung eines Spannbandverschlusses (nicht dargestellt) dienen, welche in bekannter und daher nicht näher beschriebener Art und Weise die Enden des Spannbandes 34 in Form der Festlegemöglichkeiten 36 aneinander zieht mit der Folge, daß die Bandunterlage in Form des Bandes 10 auf den Behälter 24 umfangsseitig festgepreßt wird, so daß ein fester Verbund von Spannband 34, der Bandunterlage und dem Behälter 24 gegeben ist. Dadurch, daß das Band 10 die bereits beschriebenen Längsränder 28 aufweist, ist ein Verrutschen des dünn ausgebildeten Metall-Spannbandes 34 wirksam verhindert. Die gegebenenfalls vorstehenden Enden 12 und 18 des Bandes 10 nach Verrastung auf dem Behälter 24 sind aufgrund des angezogenen Spannbandes 34 auf der Außenumfangsseite des Bandes 10 im wesentlichen plan verlaufend festgelegt.

## Patentansprüche

1. Bandunterlage für ein Spannband (34) zum Umfassen von rohrförmigen Körpern (24), wobei zwischen dem Spannband (34) und dem jeweiligen Körper (24) die Bandunterlage aus Kunststoff- oder Gummimaterial angeordnet ist, gebildet aus einem einstückigen streifenförmigen Band (10), das an seinem einen freien Ende (12) Rasten (14) aufweist, die durch eine Ausnehmung (16) am anderen Ende (18) durchsteckbar und verhakbar sind und wobei die Rasten (14) längs einer laschenförmigen Verlängerung (20) des Bandes (10) angeordnet sind, **dadurch gekennzeichnet, daß** die Ausnehmung (16) eine schlitzförmige Verbreiterung (22) aufweist und daß diese schlitzförmige Verbreiterung (22) an der dem Bandende (18) abgekehrten Seite der Ausnehmung (16) angeordnet ist.

2. Bandunterlage nach Anspruch 1, **dadurch gekennzeichnet, daß** die Rasten (14) aus dreieckförmigen Vorsprüngen gebildet sind, die paarweise einander gegenüberliegend längs der beiden Laschenränder angeordnet sind.

3. Bandunterlage nach Anspruch 1 oder 2, **dadurch gekennzeichnet, daß** mindestens eine weitere Ausnehmung (16a) vorhanden ist, daß die Ausnehmungen (16,16a) hintereinander in Reihe angeordnet das eine Bandende (18) durchgreifen, das gegenüber dem sonstigen Band (10) in der Breite abgesetzt ist und daß die jeweilige Ausnehmung (16,16a) bis auf die schlitzförmigen Verbreiterungen (22,22a) rechteckförmig ausgebildet ist.

4. Bandunterlage nach einem der Ansprüche 1 bis 3, **dadurch gekennzeichnet, daß** die laschenförmige Verlängerung (20) zu ihrem freien Ende hin sich in der Breite verringert und parallel zueinander verlaufende Schlitze (26) aufweist, die zwischen dem Bandende (12) und den Rasten (14) angeordnet sind.

5. Bandunterlage nach einem der Ansprüche 1 bis 4, **dadurch gekennzeichnet, daß** das Band (10) außenumfangsseitig zumindest teilweise randseitig einen vorstehenden Rand (28) aufweist.

## Claims

1. An insert for a clamp (34) for clasping tubular bodies (24), whereby the insert of plastic or a rubber material is arranged between the clamp (34) and the respective body (24), formed of a one-piece strip-like band (10) which has notches (14) at its free end (12), which can be pulled through an opening (16) and hooked at the other end (18) and whereby the notches (14) are arranged along a strap-like extension (20) of the band (10), **characterised in that** the opening (16) has a slot-like widening (22) and that this slot-like widening (22) is arranged on the side of the opening (16) away from the band end (18).

2. An insert according to Claim 1, **characterised in that** the notches (14) are formed by triangular protrusions arranged opposite to each other in pairs along the two edges of the strap.

3. An insert according to Claim 1 or 2, **characterised in that** at least one further opening (16a) is provided, that the openings (16, 16a) pass through the band end (18) one behind the other in a row, the said band end being stepped to a width reduced in relation to the rest of the band (10) and that each opening (16, 16a), including the slot-like widening (22, 22a) is rectangular.

4. An insert according to one of the Claims 1 to 3, **characterised in that** the width of the strap-like extension (20) narrows towards its free end and has slots (26) which are parallel to each other, arranged between the band end (12) and the notches (14).

5. An insert according to one of the Claims 1 to 4, **characterised in that** the band (10) has on the outside periphery an edge (28) projecting at least partly on the edge.

## Revendications

1. Support de collier pour un collier de serrage (34) destiné à enserrer des corps tubulaires (24), le support de collier en matière plastique ou en caoutchouc étant disposé entre le collier de serrage (34) et le corps (24) correspondant et étant formé par une lanière (10) d'une seule pièce en forme de bande, dont l'une des extrémités libres (12) comporte des crans d'arrêt (14), qui peuvent être enfichés et s'accrocher dans un évidement (16) réalisé dans l'autre extrémité (18) libre et les crans d'arrêt (14) peuvent être disposés le long d'un prolongement (20) en forme de languette de la lanière (10), **caractérisé en ce que** l'évidement (16) comporte un élargissement (22) en forme de fente et **en ce que** cet élargissement (22) en forme de fente est réalisé sur le côté de l'évidement (16) opposé à l'extrémité (18) de la lanière.

2. Support de collier selon la revendication 1, **caractérisé en ce que** les crans d'arrêt (14) sont formés par des saillies triangulaires, qui sont disposées face à face par paires le long des bords de la languette.

3. Support de collier selon la revendication 1 ou 2, **caractérisé en ce qu'**au moins un autre évidement (16a) est prévu, **en ce que** les évidements (16, 16a), disposés en rang l'un derrière l'autre, passent à travers l'extrémité de lanière (18) qui est décalée en largeur par rapport au reste de la lanière (10) et **en ce que**, hormis les élargissements (22, 22a) en forme de fente, chaque évidement (16, 16a) a une forme rectangulaire.

4. Support de collier selon l'une quelconque des revendications 1 à 3, **caractérisé en ce que** le prolongement (20) en forme de languette diminue de largeur dans la direction de son extrémité libre et comporte des fentes (26), qui sont parallèles les unes aux autres et sont disposées entre l'extrémité (12) de la lanière et les crans d'arrêt (14).

5. Support de collier selon l'une quelconque des revendications 1 à 4, **caractérisé en ce que** la lanière (10) est munie sur sa périphérie extérieure d'un bord (28) en saillie, réalisé au moins sur une partie du côté du bord.
